(19) Europäisches Patentamt

European Patent Office

Office européen des brevets

(11) **EP 4 075 114 B1**

(12) **EUROPEAN PATENT SPECIFICATION**

(45) Date of publication and mention
of the grant of the patent:
**21.05.2025 Bulletin 2025/21**

(21) Application number: **21168893.2**

(22) Date of filing: **16.04.2021**

(51) International Patent Classification (IPC):
***G01M 5/00*** *(2006.01)*  ***G01K 11/3206*** *(2021.01)*
***G01K 1/02*** *(2021.01)*

(52) Cooperative Patent Classification (CPC):
**G01M 5/00; G01K 1/026; G01K 11/3206**

(54) **METHOD FOR REAL-TIME MONITORING OF STRUCTURAL CHANGES**

VERFAHREN ZUR ECHTZEITÜBERWACHUNG VON STRUKTURVERÄNDERUNGEN

PROCÉDÉ DE SURVEILLANCE EN TEMPS RÉEL DE CHANGEMENTS STRUCTURELS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.10.2022 Bulletin 2022/42**

(73) Proprietor: **Universität Stuttgart
70174 Stuttgart (DE)**

(72) Inventors:
• **HARGER SAKIYAMA, Felipe Isamu
Stuttgart (DE)**
• **LEHMANN, Frank
Stuttgart (DE)**

(74) Representative: **Kailuweit & Uhlemann
Patentanwälte
Partnerschaft mbB
Bamberger Straße 49
01187 Dresden (DE)**

(56) References cited:
**EP-A1- 3 401 661      WO-A2-2013/173860
US-A1- 2014 324 367    US-A1- 2019 332 102
US-B1- 10 964 130**

**Description**

The present invention relates to a method for real-time monitoring of structural changes applying a reliable algorithm, the use of a data processing device for carrying out the method, a data processing device comprising means to carry out the method, a computer program product that carries out the method, a storage medium that can be read by a data processing device and the use of a measuring arrangement. The invention aims mainly at civil engineering structures, but may be employed at any other monitored structure.

In general, infrastructure buildings, especially bridges, are fundamental links for goods and people. However, those structures face aging and decay. In order to increase safety and reduce maintenance costs, permanent monitoring is advantageous. This monitoring can be complex, especially for structures with components that are not easily accessible for visual inspection or where visual inspection may not reveal structural changes.

It may be of interest for a variety of reasons, e.g. economic, infrastructural or political, to keep those structures in service, despite their aging. Comprehensive visual inspection in the immediate vicinity is regularly used but not always suitable. There are a high number of structures whose design makes a regular inspection of every component impossible. To overcome this issue and optimize the management of bridge structures, structural health monitoring has been applied in the structural engineering field since the 1970s [1]. In addition, it is necessary to cover the time interval between visual inspection events. A solution is to install structural monitoring devices at the affected buildings.

A dense array of sensors is needed to capture changes in the structural behavior or materials under the given influences, especially, it the probable failure locations are unknown [2].

Typical sensor types suitable to monitor a building's status are fiber optic sensors [3]. Fiber optic sensing is used in building monitoring, e.g. for the instrumentation of reinforced concrete bridges. Those measurement systems comprise a light source, a light-transmitting cable, sensors and a light detector. Typically, the sender and receiver are integrated into one optoelectronic device, the interrogator. The sensors are chosen concerning the specific application, resulting in different requirements. For the location of crack openings in the $\mu$m-range, a high spatial resolution and accuracy is necessary. To get further information about the surrounding conditions, other parameters such as the temperature can be determined.

There are specific methods to monitor buildings using sensing technics, e.g. a method as disclosed in DE 100 25 914 A1. Measurement results of sensors placed at such buildings are monitored and evaluated. Those methods frequently have the problem on managing the high amount of data and the unknown structural reaction to local material changes, such as prestressing steel fractures, cracking, etc. In addition, the initial boundary conditions are usually unknown outside a laboratory environment. Furthermore, the temperature influence and other external impacts on the measured values can be significant. Still, those influences are usually not critical from the structural design point, depending on the structure. Accordingly, automatic data verification is only possible to a limited extent resulting in a high amount of critical data that has to be checked and interpreted manually. Consequently, constant availability of personnel resources is required due to additional checking of the data and visual inspections on-site.

Another known method for monitoring structural health in buildings in known from WO 2013/173860.

The task of the present invention is to overcome the disadvantages of the state of the art and to propose a method that can be used to monitor a building permanently with enhanced reliability and efficiency.

A first aspect of the invention provides a method for real-time analysis and detection of unexpected changes during structural health monitoring, applying a certain number N of sensors which are placed on the monitored structure to measure a parameter $s_i(t_k)$ at the time $t_k$, comprising the following steps:

1) Determining at least two consecutive series of the measurement parameters $s_i(t_k)$ of all N sensors for a moving time window $t_w$ with a defined block length n and a sampling rate r. The number of measurement points n of one series is called block length and it depends on both the time interval and the sampling rate. In the context of the invention, the moving time window $t_w$ means consecutive time intervals.

2) Using a data processing device to verify whether the following conditions are fulfilled:

2.1) The correlation coefficient $\rho_{pq}$ of two related sensors p and q is smaller than a limit $L_{ac}$. The applied correlation coefficient is typically a Pearson's type, but any other numerical measure of a statistical relationship between two variables may be used.

2.2) The maximum signal amplitude $A_i$ of one of the sensors p and q is higher than a limit $A_L$. The signal amplitude is a parameter that characterizes the amplitude, such as the peak-to-peak amplitude or the **Kailuweit & Uhlemann I** Patentanwälte effective value. The peak-to-peak amplitude $A_N$ is the change between the highest amplitude and the lowest amplitude in the time series.

2.3) The difference of two consecutive mean values of one of the sensors p and q is higher than a limit $L_{SM}$. The mean values $M_p$ and $M_q$ of the sensors p and q are statistical values that represent the structure's unloaded state during the time interval $t_w$, preferably the statistical mode, but alternatively the arithmetic mean or the median. In the case of a continuous or quasi-continuous distribution and if the statistical mode is used, it is calculated with discretization techniques. A histogram of the analyzed sample is constructed, and the statistical mode will be the value where the histogram reaches its peak. Usually, this procedure is implemented in math libraries.

3) If all three conditions of step 2) are fulfilled, output a signal.

Preferably, the correlation coefficient of condition 2.1) is the Pearson's correlation coefficient or any other numerical measurement of statistical relationship between two variables.

Preferably, the signal amplitude of condition 2.2) is the peak-to peak amplitude or the effective value or any other parameter that characterizes the amplitude.

Preferably, the mean value of condition 2.3) is the statistical mode or any other statistical value that represents the structure's unloaded state during the time interval $t_w$.

The two related sensors p and q are, for example, two adjacent sensors p and q.

The method provides an algorithm for the reliable real-time detection of sudden changes in structural health monitoring. For that, a three-step condition algorithm is applied to identify critical events in a data set.

An advantage of the invention is the translation of the measured data to reliable information, i.e., the interpretation and handling of massive amounts of data during runtime while reducing the need for additional manual data checking and strongly decreasing false-positive notifications of critical structural behavior. The evaluation of the measurement data is possible in autonomous operation during runtime.

A further advantage of the invention is the measurement and evaluation of large datasets from successive time intervals during runtime without the need of storing nor transferring the raw data.

This means that under normal structural behavior, only the relevant analysis results are saved The whole set of measurement results for a certain time interval is only stored in the case of a critical evaluation result.

The here proposed method is mainly developed for structural health monitoring of large civil structures with focus on, but not limited to the parameters stain change, cracking and crack development. The algorithm can be applied in the same way to other measurement tasks such as temperatures or inclinations. It is also suitable for monitoring the performance and health of large machines, airframes, turbines, vehicles for land, sea and ar, and structures such as buildings, bridges, dams, and stadiums. The method is also suitable to perform monitoring of individual components thereof.

In a preferred embodiment of the invention, the applied sensors are fiber optic sensors.

Depending on the monitored parameter, the sensors are placed on the structure at a customized distance from one another. For a continuous area coverage, a layout of partially overlapping sensors may be applied.

Preferably, the condition 2.1) is a necessary condition whose fulfillment is verified first, and the conditions 2.2) and 2.3) are sufficient conditions whose fulfillment is verified afterwards.

The verification process for condition 2.1) includes the following steps:

2.1.1) Determining the arithmetic means $\mu_N$ of the parameters' series for each of the N sensors for the time interval $t_w$

2.1.2) Determining the correlation coefficient of every pair of two related sensors p and q with related measurements, preferably adjacent, for the time interval $t_w$. Related sensors are any, where specific loading conditions provoke specific and repeatable reactions in both sensors. That means there are N - 1 pairs of adjacent sensors (p, q), for N sensors placed along one direction of the building and additionally any number of otherwise related sensor pairs (p, q), starting from zero (no other relations) to $(N-1)^2$ pairs, if all sensor readings are related, e.g., the local tensile strains of a statically determined, single-span Euler-Bernoulli beam under uniform load. The applied formula for the correlation coefficient $\rho_{pq}(t_w)$ for the time interval $t_w$ is

$$\rho_{pq}(t_w)\frac{\sum_{k=1}^{n}(s_{p,k} - \mu_p) \cdot (s_{q,k} - \mu_q)}{\sqrt{\sum_{k=1}^{n}(s_{p,k} - \mu_p)^2} \cdot \sqrt{(s_{q,k} - \mu_q)^2}}$$

with $s_{p,k}$ and $s_{q,k}$ being the measured parameter of sensor p and q, respectively, at the time $t_k$ and with $\mu_p$ and $\mu_q$ being the arithmetic mean of the series of parameters s of the sensor p and q, respectively, for the time interval $t_w$.

2.1.3) Comparing the correlation coefficient $\rho_{pq}(t_w)$ to a minimum limit $L_{ac}$. The user can define the limit $L_{ac}$ according to the circumstances, e.g. the type of structure, the construction material, the structure's size, the loading conditions and the type of sensors applied. The calculated correlation coefficient of the sensors p and q is a measure of the linear correlation between their data sets. The correlation is high for a correlation coefficient $\rho_{pq}(t_w) = \pm 1$ and it is not present for $\rho_{pq}(t_w) = 0$.

The verification process for condition 2.2) includes the following steps:

2.2.1) Determining the signal amplitude $A_i$ of the

series of measurement parameters $s_i(t_w)$ of every sensor i in the time interval $t_w$. The signal amplitude $A_N$ is a measure of unusual changes in the system. The presence of a high signal amplitude can be caused, e.g., by a sudden change in the structural system or loading levels above an allowable limit. Preferably, the signal amplitude is the peak-to-peak amplitude.

2.2.2) Comparing the signal amplitude for every sensor with a maximum limit $L_{amp}$. The limit $L_{amp}$ can be determined from a stress test at the relevant building or a value chosen from experience or an initial dataset. Another possible solution to gain a sufficient limit is to model the structure and its parameters, e.g., using the finite element method.

The verification process for condition 2.3) includes the following steps:

2.3.1) Determine the mean value $M_i$ of each series $s_i$ $(t_w)$ for every sensor i. A change in the mean value can be the result of external parameters such as the temperature variation. However, if an abrupt change occurs, this is a sign of a sudden change in the system.
2.3.2) Calculate the difference between the mean value of series $t_w$ of the sensor with the previously measured series $t_{w-1}$ of the same sensor
2.3.3) Compare the differences with a limit $L_m$. The limit $L_m$ is found by considering the mean value's history. The history shows the changes due to the external parameters and may provide a sufficient value that should not be exceeded.

Preferably, step 2.3.2) and/ or 2.3.3) are only performed, if the verifications of both steps 2.1) and 2.2) surpass their limits for sensor i.

If the limit $L_m$ is not surpassed in process step 2.3.3), the method preferably comprises additional steps:

2.3.4) the determined mean values are kept in memory.
2.3.5) Repeat step 2.3.2) and 2.3.3) for time series $t_w$ and $t_{w+1}$. This step considers that the change of the mean value depends on whether the change in the parameter occurs in the first or second half of the time window $t_w$.

In the context of the invention, the term "output a signal" of step 3) means, for example, the data output of the relevant sensors' series of the measurement parameters or the output of a notification, preferably both. The data output can be realized by storing the data of the relevant event. Preferably, the parameters measured at step 1) are stored temporarily, and only the data calculated in step 2) is stored permanently.

The advantage of this method is the possibility of only saving the data for the relevant sensors at a critical time. Therefore, the size of the data storage may be significantly reduced. The method allows a real-time analysis during runtime and damage detection during monitoring in combination with less required storage space and data transfer capacity.

All three conditions 2.1), 2.2) and 2.3) of step 2) need to be fulfilled to output a signal according to step 3). The output of the signal in step 3) is then only performed if all three conditions are fulfilled.

In a preferred embodiment of the invention, the applied sensors are fiber optic sensors that measure the strain. However, the algorithm can be applied in the same way to other measurement tasks for other measured values, such as temperatures or inclinations. Therefore, a preferred method applies temperature sensors or sensors that measure the inclination of the building. Preferably, a combination of different sensors is applied and evaluated, e.g. a combination of strain and temperature sensors.

An additional aspect of the invention relates to a computer program product that carries out the inventive method.

Furthermore, the invention is related to a storage medium that can be read by a data processing device and on which such a computer program product is stored and executed.

Another aspect of the invention is related to a use of a measuring arrangement with N sensors to measure the parameter s positioned on a building, wherein the measuring arrangement includes a data processing device that applies the inventive method.

Preferably, the availability of a stable internet connection is applied to send notifications in real-time. Alternatively, the notifications can be display with signaling devices such as traffic lights at the monitored structure's location.

The described method is sufficient for a real-time monitoring of unexpected structural changes, applying a certain number N of sensors, which are placed on the monitored structure and whereas the sensors measure a certain parameter such as strain or temperature. The method provides an algorithm for the reliable real-time detection of sudden changes in structural health monitoring systems. For that, a three-step condition algorithm is applied to identify critical events in a data set and therefore separate usual measurement results from critical data. An important advantage of this method is the translation of the measured data to reliable information, i.e. the interpretation and handling of a massive amount of data while reducing the need for additional manual data checking and strongly decreasing false-positive notifications of critical structural behavior.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination.

The following detailed description of an exemplary embodiment of the invention is presented to enable any person skilled in the art to make and use the disclosed subject matter in the context of one or more particular implementations. Various modifications to the disclosed implementations will be readily apparent to those skilled in the art, and the general principles defined herein may be applied to other implementations and applications without departing from the scope of the disclosure as defined by the appended claims.

Implementations of the invention will be described, by way of example only, regarding accompanying drawings in which:

Figure 1 schematically shows a side view of a bridge to place the sensors on,
Figure 2 schematically shows two sets of sensors for the measurement of the longitudinal stain places under such a bridge of Fig. 1,
Figure 3 schematically shows two adjacent Fiber sensors and
Figure 4 shows a flowchart of the proposed method applied in the described example of figures 1 to 3.

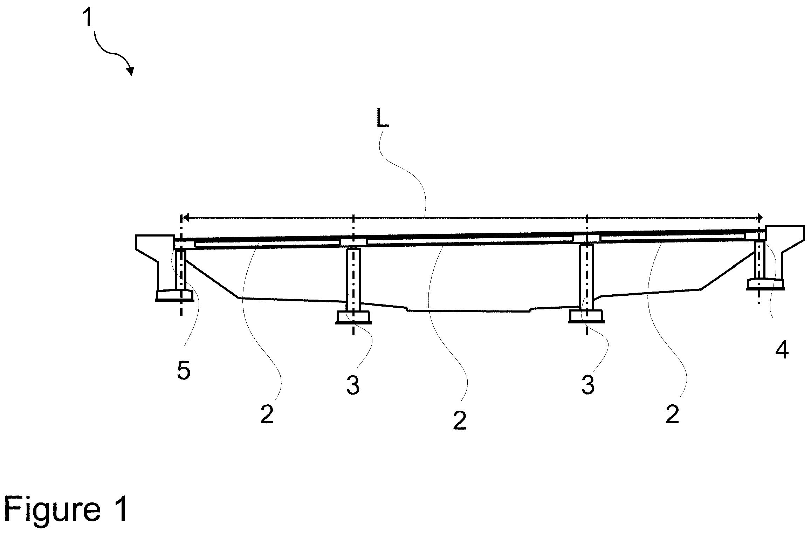

**Figure 1** shows a real-time monitored building 1 being a prestressed hollow-core concrete bridge. The design load class is BK 60 (60 tons wheeled type load), according to DIN 1072. With a width of 11.08 m. It has three continuous spans 2 with a total length L of 57.00 m (17.00 m - 23.00 m - 17.00 m) without coupling joints. The two center columns 3 are designed as individual supports with pot bearing. The superstructure is supported by two linear rocker bearings on the southern abutment 4, and the northern abutment 5, by two roller bearings.

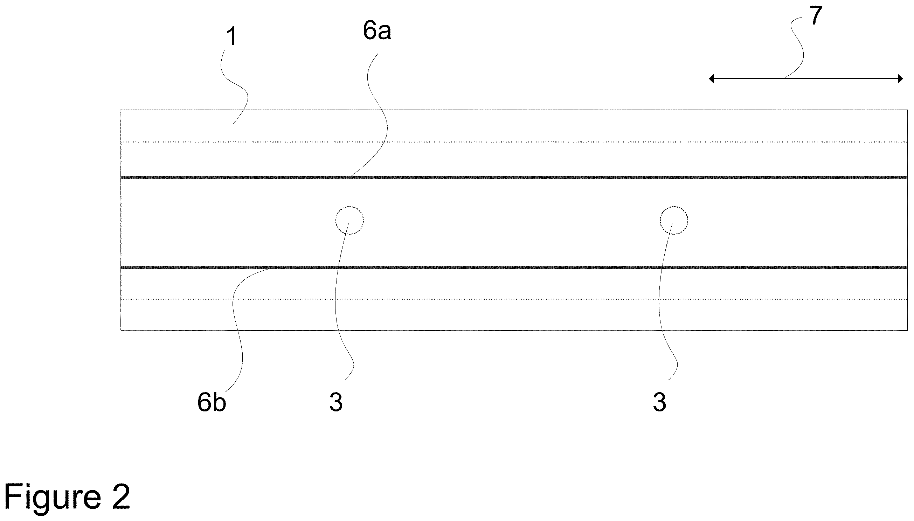

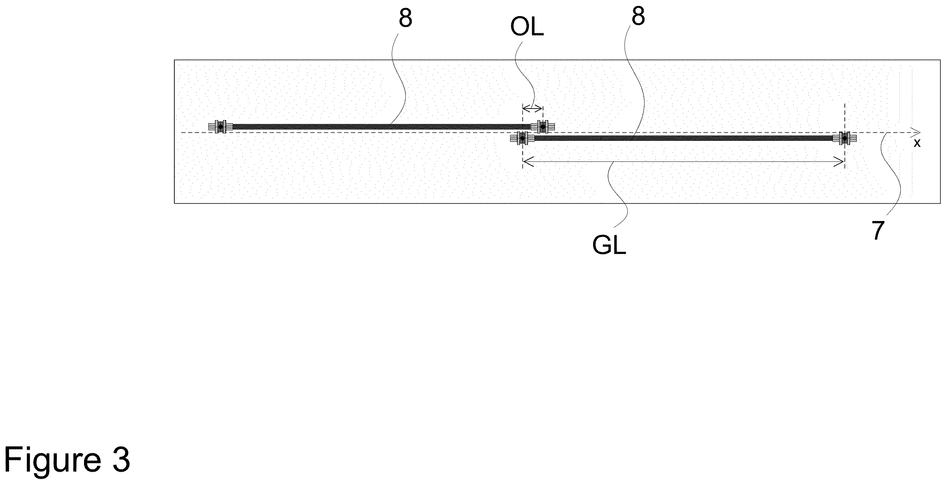

**Figure** 2 shows a part of the bridge 1 of Figure 1 from below. There are two sets of sensors 6a, 6b placed under the bridge 1. Each set 6a, 6b comprises N=27 sensors along the longitudinal direction 7 of the bridge 1. Two adjacent sensors 8 are visualized in Figure 3. The applied sensors 8 are Fiber Bragg Grating (FBG) fiber optic sensors with a gauge length GL of 205 cm, where the overlapping OL of 5 cm is applied between every pair of adjacent sensors.

The monitoring system is based on a long-gauge Fiber Bragg Grating (LGFBG) sensor network installed on a prestressed concrete bridge. Statistical and quantitative parameters are continuously updated from the strain and temperature data stream using a real-time computing algorithm that performs, amongst others, a correlation analysis between adjacent sensors and allows the automatic detection of unexpected local structure changes by the minute. The algorithm is built based on redundancy to enhance its reliability and prevent false calls. Here, a three-step check is performed to handle outliers, noise, and other random and unpredictable events. That means the fulfillment of all three conditions is necessary for signal output. One important advantage of the proposed algorithm is the possibility of implementing it inside the data acquisition software and executing it during runtime. In other words, the damage detection algorithm runs parallel to the measurements, and the analysis is carried out before data storage, and data transmission take place.

The applied sampling rate is 200 Hz, generating over 10 thousand measurement points per second for the 54 strain sensors placed longitudinally. The sampling rate was defined to optimize the representation of extreme values such as load peaks during the crossing of a vehicle.

As an advantage, the high sampling rate does not imply that all the measured data must be stored at the same pace. For the applied method, the analyzed dataset may rest in a temporary buffer. As soon as a batch of data is analyzed, only the statistical results are stored. The raw data is then discarded, except if the algorithm detects an anomaly, i.e., all three conditions show critical results. In the case of an anomaly, only the affected data segment is stored completely. Stress fractures are to be detected on the instrumented bridge, also the formation of new cracks in the concrete caused by other sources.

Statistical values are continuously determined from each sensor's strain data over an optimized period of time. In detail, these are the statistical mode, the arithmetic mean $\mu$, and the peak-to-peak amplitude. The measured amplitude curves of adjacent sensors p and q are compared within a time window to show whether they are correlated. For that, the correlation coefficient is calculated and evaluated. The correlation coefficient between two adjacent sensor's measured values is usually close to 1 for a high sampling rate and a continuous system. If the correlation deviates from 1, this is assumed to be the first indicator for a statistical discontinuity.

In this respect, this evaluation can also be used to infer existing geometric discontinuities, e.g., hollow bodies or built-in parts, or existing damage in the initial state for monitoring. Furthermore, slow changes in this parameter can also detect creeping damage processes, e.g., corrosion or fatigue. This indicator is a necessary condition for notification but cannot serve as the only sufficient one. Influences from wind or traffic loads, for example, can also lead to deviations.

Therefore, each individual sensor's the peak-to-peak amplitude is compared with a maximum permissible limit value. This can ideally be determined via an initial load test or concluded from the recorded measurement data after a certain time. Since only short periods of time are considered in each case, this amplitude parameter is independent of the temperature.

Last, as a further condition, the changes in each sensor's statistical modes are compared with the value determined in the last analyzed period. Sudden changes in the structure lead to a jump in amplitude for this parameter. The parameter itself captures long-term changes, such as the ones due to temperature influence, but is independent of them in the continuous comparative evaluation.

Appropriate thresholds must be established for all three indicators. In contrast to existing approaches, however, these do not refer to the measured values per se, but to derived parameters, each of which is particularly sensitive to different factors: the mode to the temperature, the peak-to-peak amplitude to the traffic load, and the correlation coefficients to the static system. This can significantly increase the stability of the method. Only if all three indicators show critical values, a notification is triggered.

The innovation lies in the combination of the three different evaluations and the traceability to different influences.

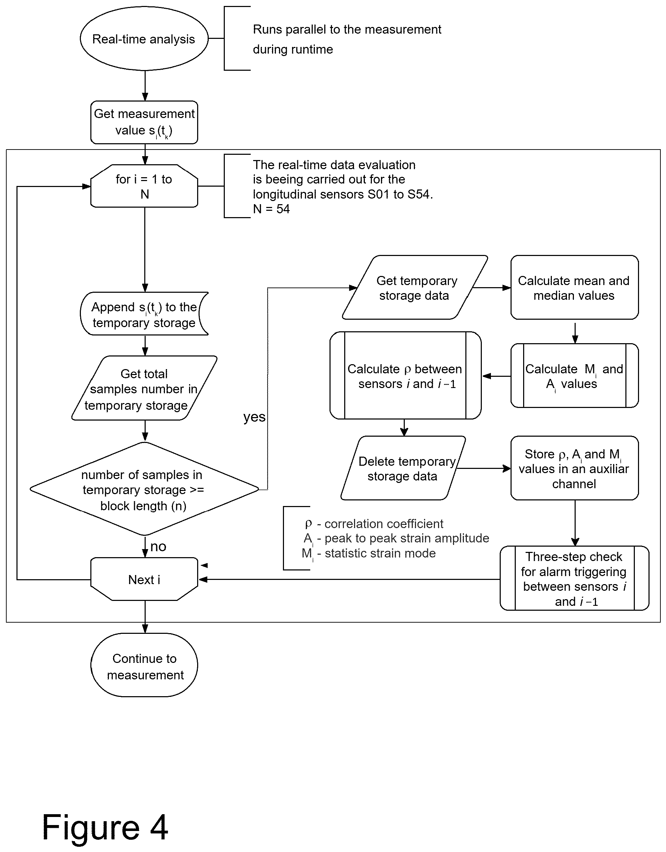

**Figure 4** shows a flowchart of the proposed method applied in the described example of figures 1 to 3. The data analysis is performed as a real-time analysis, i.e. the analysis runs parallel to the measurement during runtime. For an evaluation of the measured data according to the three-step algorithm, the total samples number, i.e. the total number of measurement values for one sensor i, is required to be at least the defined block length n.

**Non-patent literature:**

[1] Farrar, C.R.; Worden, K. An introduction to structural health monitoring. Philos. Trans. R. Soc. 2007, 303-315, doi:10.1098/rsta.2006.1928.

[2] Sakiyama, F.I.H.; Lehmann F. and Garrecht, H "Structural health monitoring of concrete structures using fibre-optic-based sensors: a review" Magazine of Concrete Research, https://doi.org/10.1680/jmacr.19.00185

[3] Lehmann, A.F., Sakiyama, F.I.H. and Fackler, R.M. "Fibre optic measurement systems for building monitoring", Otto-Graf-Journal, Vol. 18, 2019

**Definitions**

| | |
|---|---|
| n | block length (time window size) |
| N | total number of sensors |
| k | sample index |
| r | sampling rate |
| $t_k$ | timestamp |
| $t_w$ | moving time window (time interval) with block length n |
| i | sensor index, $1 \le i \le N$ |
| $A_i$ | amplitude of sensor i |
| $M_i$ | mean value for sensor i |
| p, q | sensor pair |

| | |
|---|---|
| $s_i(t_k)$ | measurement value for sensor i at timestamp $t_k$ |
| $s_i(t_w)$ | vector with all measurement values for sensor i in the current time window $t_w$ |
| $s_{p,k}$ | measurement value for sensors p at the time $t_k$ |
| $s_{q,k}$ | measurement value for sensors q at the time $t_k$ |
| $\mu_p, \mu_q$ | arithmetic mean value for sensors p and q |
| $M_p, M_q$ | mean value for sensors p and q |
| $\rho_{pq}$ | Corelation coefficient for sensors p and q |
| $L_{ac}$ | Limit for the correlation coefficient |
| $L_m$ | Limit for the mean value |
| $L_{amp}$ | Limit for the amplitude |

**List of reference signs**

| | |
|---|---|
| 1 | Building, structure, bridge, component |
| 2 | Span |
| 3 | Center column |
| 4 | Southern abutment |
| 5 | Northern abutment |
| 6a | First set of sensors |
| 6b | Second set of sensors |
| 7 | Longitudinal direction |
| 8 | Sensor |
| L | Length of the bridge |
| GL | Gauge length of the Fiber sensor |
| OL | Overlapping of two adjacent sensors |

**Claims**

1. Method for real-time detection of sudden changes during structural health monitoring, applying a certain number N of sensors (8), which are placed on a monitored structure (1) to measure a parameter $s_i(t_k)$ at the time $t_k$, comprising the following steps:

   1) Determining at least two consecutive series of the measurement parameters $s_i(t_k)$ of all N sensors for a moving time window $t_w$ with a defined block length n and sampling rate r

   2) Using a data processing device to verify whether of the following conditions are fulfilled:

      2.1) a correlation coefficient $\rho_{pq}$ of the measured parameters of two related sensors p and q is smaller than a limit $L_{ac}$

      2.2) a signal amplitude of the measured parameters of one of the sensors p and q is higher than a limit $A_L$

      2.3) a difference of two consecutive mean values of the measured parameters of one of the sensors p and q is higher than a limit $L_m$

3) If all three conditions 2.1), 2.2) and 2.3) of the conditions of step 2) are fulfilled, output a signal.

2. Method according to claim 1, wherein the correlation coefficient of condition 2.1) is the Pearson's correlation coefficient.

3. Method according to claim 1 or 2, wherein the signal amplitude of condition 2.2) is the peak-to-peak amplitude.

4. Method according to one of the claims 1 to 3, wherein the mean value of condition 2.3) is the statistical mode.

5. Method according to one of the claims 1 to 4, wherein the verification step of condition 2.1) comprises the following steps:

> 2.1.1) Determining the arithmetic mean $\mu_N$ of the parameters series for each of the N sensors for the time interval $t_w$
> 2.1.2) Determining the correlation coefficient $\rho_{pq}$ of each pair of related sensors p, q for the time interval $t_w$ and
> 2.1.3) Comparing the correlation coefficient $\rho_{pq}$ to a minimum limit $L_{ac}$. **Kailuweit & Uhlemann I** Patentanwälte

6. Method according to one of the claims 1 to 5, wherein the verification step of condition 2.2) comprises the following steps:

> 2.2.1) Determining the signal amplitude $A_i$ for each series $s_i(t_w)$ of every sensor i in the time interval $t_w$
> 2.2.2) Comparing each peak-to-peak amplitude $A_i$ to a limit $L_{amp}$.

7. Method according to one of the claims 1 to 6, wherein the verification step of condition 2.3) comprises the following steps:

> 2.3.1) Determine the mean value $M_i$ of each series $s_i(t_w)$ for every sensor i,
> 2.3.2) Determine the difference between mean value of series $t_w$ of each sensor i and the mean value of the previously measured series $t_{w-1}$ of the same sensor and
> 2.3.3) Compare the differences of the mean values to a limit $L_m$.

8. Method according to claim 7, wherein the steps 2.3.2) and 2.3.3) are only performed, if the verifications of both steps 2.1) and 2.2) surpass their limits for sensor i.

9. Method according to claim 7 or 8, wherein it additionally comprises the following step, if the limit $L_m$ is not surpassed in process step 2.3.2):

> 2.3.4) the determined mean values are kept in memory, and
> 2.3.5) Repeat step 2.3.2) and 2.3.3) for time series $t_w$ and $t_{w+1}$.

10. Method according to one of the claims 1 to 9, wherein the applied sensors are fibre optic sensors that measure the strain or temperature sensors or the applied sensors measure the inclination of the building.

11. A computer program product comprising instructions to cause a measuring arrangement comprising N sensors (8) to measure the parameter s that are positioned on a building (1), wherein the measuring arrangement includes a data processing device to execute the steps 2) and 3) of the method according to any of the claims 1 to 10.

12. A storage medium that can be read by a data processing device and on which a computer program product according to claim 11 is stored or executed.

13. Use of a measuring arrangement with N sensors (8) to measure the parameter s that are positioned on a building (1), wherein the measuring arrangement includes a data processing device for carrying out the method according to the claims 1 to 10.

**Patentansprüche**

1. Verfahren zur Echtzeit-Erkennung von plötzlichen Änderungen bei der Überwachung eines Strukturzustandes, wobei eine bestimmte Anzahl N von Sensoren (8) verwendet wird, die an einer überwachten Struktur (1) angebracht sind, um einen Parameter $s_i$ ($t_k$) zum Zeitpunkt $t_k$ zu messen, aufweisend die folgenden Schritte:

> 1) Ermittlung von mindestens zwei aufeinanderfolgenden Messreihen der Parameter $s_i(t_k)$ aller N Sensoren für ein gleitendes Zeitfenster $t_w$ mit einer definierten Blocklänge n und Abtastrate
> 2) Verwendung einer Datenverarbeitungseinrichtung, um zu überprüfen, ob eine der folgenden Bedingungen erfüllt ist:

> > 2.1) Ein Korrelationskoeffizient $\rho_{pq}$ der gemessenen Parameter zweier zusammengehöriger Sensoren p und q kleiner als ein Grenzwert $L_{ac}$ ist
> > 2.2) eine Signalamplitude der gemessenen Parameter eines der Sensoren p und q über einem Grenzwert $A_L$ liegt

2.3) eine Differenz von zwei aufeinander folgenden Mittelwerten der gemessenen Parameter eines der Sensoren p und q größer ist als ein Grenzwert $L_m$

3) Wenn alle drei Bedingungen 2.1), 2.2) und 2.3) der Bedingungen von Schritt 2) erfüllt sind, wird ein Signal ausgegeben.

2. Verfahren nach Anspruch 1, wobei der Korrelationskoeffizient der Bedingung 2.1) der Korrelationskoeffizient nach Pearson ist.

3. Verfahren nach Anspruch 1 oder 2, wobei die Signalamplitude der Bedingung 2.2) die Spitze-Spitze-Amplitude ist.

4. Verfahren nach einem der Ansprüche 1 bis 3, wobei der Mittelwert von Bedingung 2.3) der statistische Modalwert ist.

5. Verfahren nach einem der Ansprüche 1 bis 4, wobei der Verifizierungsschritt von Bedingung 2.1) die folgenden Schritte umfasst:

2.1.1) Bestimmung des arithmetischen Mittelwerts $\mu_N$ der Parameterreihen für jeden der N Sensoren für das Zeitintervall $t_w$
2.1.2) Bestimmung des Korrelationskoeffizient $\rho_{pq}$ eines jeden Paares zusammengehöriger Sensoren p, q für das Zeitintervall $t_w$ und
2.1.3) Vergleich des Korrelationskoeffizienten $\rho_{pq}$ mit einem Mindestgrenzwert $L_{ac}$.

6. Verfahren nach einem der Ansprüche 1 bis 5, wobei der Verifizierungsschritt von Bedingung 2.2) die folgenden Schritte aufweist:

2.2.1) Bestimmung der Signalamplitude $A_i$ für jede Reihe $s_i(t_w)$ jedes Sensors i im Zeitintervall $t_w$
2.2.2) Vergleich jeder Spitze-Spitze-Amplitude $A_i$ mit einem Grenzwert $L_{amp}$.

7. Verfahren nach einem der Ansprüche 1 bis 6, wobei der Verifizierungsschritt von Bedingung 2.3) die folgenden Schritte aufweist:

2.3.1) Bestimmen Sie den Mittelwert $M_i$ jeder Reihe $s_i(t_w)$ für jeden Sensor i,
2.3.2) Bestimmen Sie die Differenz zwischen dem Mittelwert der Reihe $t_w$ jedes Sensors i und dem Mittelwert der zuvor gemessenen Reihe $t_{w-1}$ desselben Sensors und
2.3.3) Vergleichen Sie die Differenzen der Mittelwerte mit einem Grenzwert $L_m$.

8. Verfahren nach Anspruch 7, wobei die Schritte 2.3.2) und 2.3.3) nur durchgeführt werden, wenn die Verifizierungen der beiden Schritte 2.1) und 2.2) ihre Grenzwerte für Sensor i überschreiten.

9. Verfahren nach Anspruch 7 oder 8, **dadurch gekennzeichnet, dass** es zusätzlich den folgenden Schritt aufweist, wenn der Grenzwert $L_m$ im Verfahrensschritt 2.3.2) nicht überschritten wird:

2.3.4) die ermittelten Mittelwerte werden im Speicher gehalten, und
2.3.5) Wiederholung von Schritt 2.3.2) und 2.3.3 für die Zeitreihen $t_w$ und $t_{w+1}$.

10. Verfahren nach einem der Ansprüche 1 bis 9, wobei die verwendeten Sensoren faseroptische Sensoren sind, die die Dehnung oder die Temperatur messen, oder die verwendeten Sensoren die Neigung des Gebäudes messen.

11. Computerprogrammprodukt, das Anweisungen umfasst, um eine Messanordnung mit N Sensoren (8) zu veranlassen, die Parameter s zu messen, die an einem Gebäude (1) positioniert sind, wobei die Messanordnung eine Datenverarbeitungseinrichtung enthält, um die Schritte 2) und 3) des Verfahrens gemäß einem der Ansprüche 1 bis 10 auszuführen.

12. Speichermedium, das von einer Datenverarbeitungseinrichtung gelesen werden kann und auf dem ein Computerprogrammprodukt nach Anspruch 11 gespeichert oder ausgeführt ist.

13. Verwendung einer Messanordnung mit N Sensoren (8) zur Messung der Parameter s, die an einem Gebäude (1) angeordnet sind, wobei die Messanordnung eine Datenverarbeitungseinrichtung zur Durchführung des Verfahrens nach den Ansprüchen 1 bis 10 umfasst.

**Revendications**

1. Procédé destiné à la détection en temps réel de changements soudains au cours de la surveillance de la santé structurelle, appliquant un certain nombre N de capteurs (8), qui sont placés sur une structure surveillée (1) pour mesurer un paramètre $s_i(t_k)$ à l'instant $t_k$, comprenant les étapes suivantes :

1) la détermination d'au moins deux séries consécutives des paramètres de mesure $s_i(t_k)$ de tous les N capteurs pour une fenêtre temporelle mobile $t_w$ avec une longueur de bloc n et un taux d'échantillonnage r définis
2) l'utilisation d'un dispositif de traitement de données pour vérifier si les conditions suivantes sont remplies :

2.1) un coefficient de corrélation $\rho_{pq}$ des paramètres mesurés de deux capteurs apparentés p et q est inférieur à une limite $L_{ac}$

2.2) une amplitude de signal des paramètres mesurés par l'un des capteurs p et q est supérieure à une limite $A_L$

2.3) une différence entre deux valeurs moyennes consécutives des paramètres mesurés de l'un des capteurs p et q est supérieure à une limite $L_m$

3) Si les trois conditions 2.1), 2.2) et 2.3) des conditions de l'étape 2) sont remplies, émettre un signal.

2. Procédé selon la revendication 1, dans lequel le coefficient de corrélation de la condition 2.1) est le coefficient de corrélation de Pearson.

3. Procédé selon la revendication 1 ou 2, dans lequel l'amplitude de signal de la condition 2.2) est l'amplitude crête à crête.

4. Procédé selon l'une des revendications 1 à 3, dans lequel la valeur moyenne de la condition 2.3) est le mode statistique.

5. Procédé selon l'une des revendications 1 à 4, dans lequel l'étape de vérification de la condition 2.1) comprend les étapes suivantes :

2.1.1) la détermination de la moyenne arithmétique $\mu_N$ des séries de paramètres pour chacun des N capteurs pour l'intervalle de temps $t_w$

2.1.2) la détermination du coefficient de corrélation $\rho_{pq}$ de chaque paire de capteurs apparentés p, q pour l'intervalle de temps $t_w$ et

2.1.3) la comparaison du coefficient de corrélation $\rho_{pq}$ à une limite minimale $L_{ac}$.

6. Procédé selon l'une des revendications 1 à 5, dans lequel l'étape de vérification de la condition 2.2) comprend les étapes suivantes :

2.2.1) la détermination de l'amplitude de signal $A_i$ pour chaque série $s_i(t_w)$ de chaque capteur i dans l'intervalle de temps $t_w$

2.2.2) la comparaison de chaque amplitude crête à crête $A_i$ à une limite $L_{amp}$.

7. Procédé selon l'une des revendications 1 à 6, dans lequel l'étape de vérification de la condition 2.3) comprend les étapes suivantes :

2.3.1) déterminer la valeur moyenne $M_i$ de chaque série $s_i(t_w)$ pour chaque capteur i,

2.3.2) déterminer la différence entre la valeur moyenne de la série $t_w$ de chaque capteur i et la valeur moyenne de la série $t_{w-1}$ précédemment mesurée par le même capteur et

2.3.3) comparer les différences des valeurs moyennes à une limite $L_m$.

8. Procédé selon la revendication 7, dans lequel les étapes 2.3.2) et 2.3.3) ne sont exécutés que si les vérifications des deux étapes 2.1) et 2.2) dépassent leurs limites pour le capteur i.

9. Procédé selon la revendication 7 ou 8, dans lequel il comprend en outre l'étape suivante, si la limite $L_m$ n'est pas dépassée à l'étape de processus 2.3.2) :

2.3.4) les valeurs moyennes déterminées sont conservées en mémoire, et

2.3.5) la répétition des étapes 2.3.2) et 2.3.3) pour les séries temporelles $t_w$ et $t_{w+1}$.

10. Procédé selon l'une des revendications 1 à 9, dans lequel les capteurs appliqués sont des capteurs à fibre optique qui mesurent la déformation ou des capteurs de température ou les capteurs appliqués mesurent l'inclinaison du bâtiment.

11. Produit programme informatique comprenant des instructions pour amener un système de mesure comprenant N capteurs (8) à mesurer les paramètres qui sont positionnés sur un bâtiment (1), dans lequel le système de mesure comporte un dispositif de traitement de données pour exécuter les étapes 2) et 3) du procédé selon l'une quelconque des revendications 1 à 10.

12. Support de stockage pouvant être lu par un dispositif de traitement de données et sur lequel un produit de programme informatique selon la revendication 11 est stocké ou exécuté.

13. Utilisation d'un système de mesure avec N capteurs (8) pour mesurer le paramètre s qui sont positionnés sur un bâtiment (1), dans lequel le système de mesure comporte un dispositif de traitement de données permettant de mettre en œuvre les étapes 2) et 3) du procédé selon les revendications 1 à 10.

EP 4 075 114 B1

Figure 1

EP 4 075 114 B1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10025914 A1

- WO 2013173860 A

**Non-patent literature cited in the description**

- **FARRAR, C.R.** ; **WORDEN, K.** An introduction to structural health monitoring. *Philos. Trans. R. Soc.*, 2007, 303-315
- **SAKIYAMA, F.I.H.** ; **LEHMANN F.** ; **GARRECHT, H**. Structural health monitoring of concrete structures using fibre-optic-based sensors: a review. *Magazine of Concrete Research*, https://doi.org/10.1680/j-macr.19.00185

- **LEHMANN, A.F.** ; **SAKIYAMA, F.I.H.** ; **FACKLER, R.M.** Fibre optic measurement systems for building monitoring. *Otto-Graf-Journal*, 2019, vol. 18